# EUROPEAN PATENT SPECIFICATION

(11) **EP 2 137 883 B1**
(45) Date of publication and mention of the grant of the patent: **09.03.2011**
(21) Application number: 07872101.6
(22) Date of filing: 20.12.2007
(51) Int. Cl.: H04L 12/26

(54) **METHOD OF TRANSMITTING DATA IN A COMMUNICATION SYSTEM**
VERFAHREN ZUM SENDEN VON DATEN IN EINEM KOMMUNIKATIONSSYSTEM
PROCÉDÉ DE TRANSMISSION DE DONNÉES DANS UN SYSTÈME DE COMMUNICATION

(30) Priority: 13.03.2007 GB 0704834
(43) Date of publication of application: 30.12.2009
(73) Proprietor: Skype Limited, Dublin 2 (IE)
(72) Inventor: JEFREMOV, Andrei, S-17762 Järfälla (SE)
(74) Representative: Driver, Virginia Rozanne
(86) International application number: PCT/IB2007/004510
(87) International publication number: WO 2008/110871

(56) References cited:
- WO-A-2005/002261
- US-A- 6 067 534
- US-A- 6 141 565
- US-A1- 2007 002 840

## Description

### Field of the Invention

The present invention relates to information processing systems such as communication systems. More particularly the present invention relates to a method and apparatus for receiving and transmitting information in a communication system.

### Background of the Invention

In a communication system a communication network is provided, which can link together two communication terminals so that the terminals can send information to each other in a call or other communication event. Information may include speech, text, images or video.

Modern communication systems are based on the transmission of digital signals. Analogue information such as speech is input into an analogue to digital converter at the transmitter of one terminal and converted into a digital signal. The digital signal is then encoded and placed in data packets for transmission over a channel to the receiver of another terminal.

One type of communication network suitable for transmitting data packets is the internet. Protocols which are used to carry voice signals over an Internet Protocol network are commonly referred to as Voice over IP (VoIP). VoIP is the routing of voice conversations over the Internet or through any other IP-based network. Conditions associated with the communication system, such as network conditions and the resource availability of communication terminals can affect the quality of the information output at the receiving terminal. For example, degradations in the channel on which the information is sent will affect the information received at the receiving terminal. The degradations may be caused by channel imperfections, noise and overload in the channel. Similarly the resource availability of the communicating terminals, for example CPU (central processing unit) resources will affect how effectively the transmitting and receiving terminals can process information.

It is therefore necessary to optimise the manner in which information is processed and transmitted by the terminals in accordance with the conditions associated with the communication system. For example the rate at which data is transmitted may be adjusted in dependence on the available bandwidth of the channel, or on the available CPU resources of the receiving terminal.

Since it is not possible to determine the conditions of the communication system before the communication is established, settings in the terminals are adjusted during the communication. Typically algorithms are used to adjust the settings during a call. The initial value of the settings may either be adapted from a random value, or more commonly a default setting. Patent publication US 6067534, published May 23, 2000, discloses an algorithm for establishing connections using connection parameters saved in a database which comprises optimal parameters for past data transfer connections.

Adapting the settings during a call in this manner requires time to optimise the settings. Often optimisation of some settings require approximately 100 seconds. As such the initial call quality is poor.

It is therefore an aim of the present invention to improve the perceived quality of the received signal. It is a further aim of the present invention to provide a method of improving the quality of the received signal without the use of complex computational methods.

### Summary of the Invention

According to three aspects of the present invention there is provided a method of establishing parameters to facilitate a communication event according to claim 1, a method of establishing parameters to facilitate a data transmission event according to claim 17 and a device for establishing parameters to facilitate a communication event according to claim 19.

### Brief Description of Drawings

For a better understanding of the present invention and to show how the same may be carried into effect, embodiments of the present invention will now be described with reference to the following drawings:
Figure 1 shows a communication network; and
Figure 2 shows a terminal according to an embodiment of the invention.

### Detailed Description of the Invention

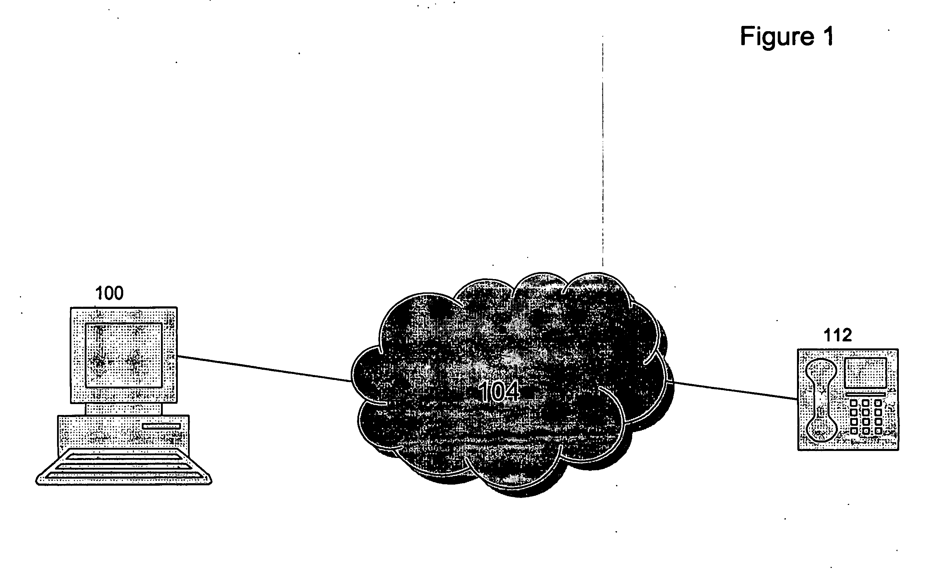

Reference will first be made to Figure 1, which shows a terminal 100 and a terminal 112 connected to a communication network 104. The terminals 100 and 112 are arranged to transmit data to each other via the communication network 104. In one embodiment of the invention the communications network is a VoIP network provided by the internet. It should be appreciated that even though the exemplifying communications system shown and described in more detail herein uses the terminology of a VoIP network, embodiments of the present invention can be used in any other suitable communication system that facilitates the transfer of data.

The terminates 100 and 112 may be, for example, a personal computer, a gaming device, a personal digital assistant, a suitably enabled mobile phone, a television or other device able to connect to the network 104. The terminals may be connected to the network via a wired or wireless connection that employs a particular access technology such as Ethernet, WiFi, WiMax (Worldwide lnteroperability for Microwave Access), 3G (third generation),

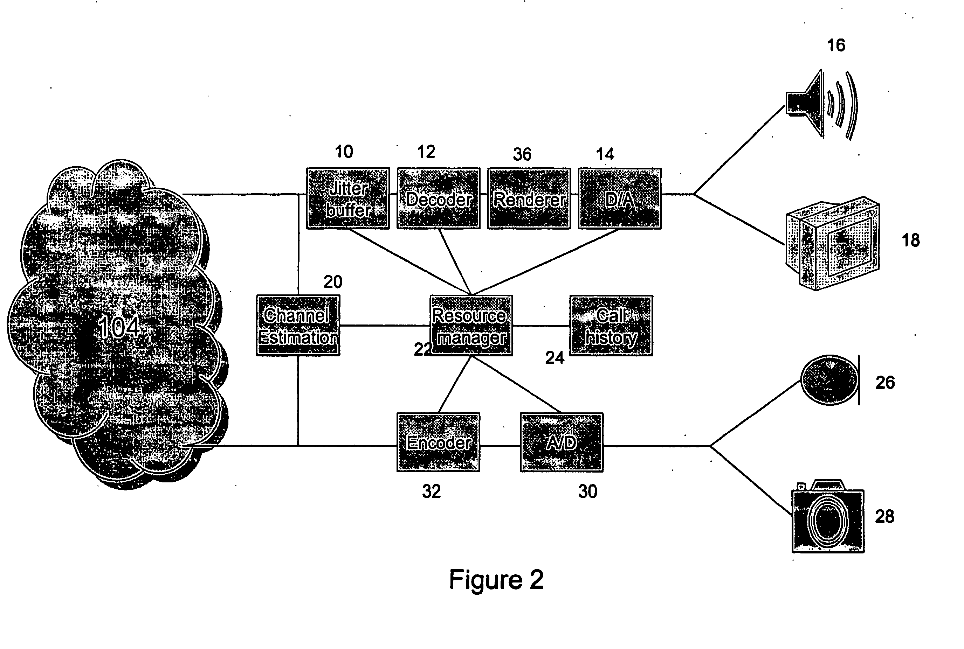

Reference will now be made to Figure 2. Figure 2 shows the terminal 100 in detail. The terminal 100 includes receiving circuitry for receiving information transmitted from the network 104. The receiving circuitry comprises a jitter buffer 10 for buffering data packets received from the network, a decoder 12 for decoding the information received in the data packets and a digital to analogue converter 14. A renderer block 36 is located between the decoder 12 and the digital to analogue converter and is arranged to handle video data to be output to a display sceen 18. The receiving circuitry is arranged to output information to various output devices such as a loudspeaker 16 and the display screen 18. The terminal 100 also includes transmitting circuitry for transmitting information via the network input from input devices such as a microphone 26 and a webcam 28. The transmitting circuitry comprises an analogue to digital converter 30 for converting analogue information input from the input device into digital information, and an encoder 32 for encoding the digital information before the information is transmitted.

The terminal 100 also includes a channel estimation unit 20, a resource manager block 22 and a call history memory 24.

The channel estimation unit 20 receives an input from the transmitting circuitry and the receiving circuitry. The channel estimation unit 20 is arranged to estimate the conditions of the transmission channel and the receiving channel. These conditions include the available bandwidth and signal propagation delay. The channel estimation unit is also arranged to estimate the resource availability of the destination terminal 112 once the destination terminal 112 has transmitted some information to the terminal 100 from which the resource availability can be estimated. The destination terminal 112 may also transmit other operating information to the terminal 100 such as information on type of access connection that is has to the communication network and on the power supply.

The resource manager block 22 is arranged to adjust the settings of the terminal 100 during a call or similar communication event. During the course of a call, at least some of the components, for example the decoder 12 the encoder 32, the channel estimation unit 20 and the renderer block 36 of the terminal 100 report the communication system conditions to the resource manager block 22. For example the channel estimation block 20 may report the available, channel bandwidths to the resource manager block 20. Similarly, the encoder 32 may report the data rate of the data being inputted for transmission, while the renderer block 36 may report the rate at which it can present video frames to the display screen 18.

The resource manager applies optimization algorithms to the reported communication system conditions to determine optimum settings for the terminal. For example if the bandwidth of the transmission channel is determined to be low the resource manager block 22 may determine that the rate at which data is encoded should be reduced. The encoded data rate calculated by the resource manager block 22 is then output to the encoder 32. If the conditions of the communication system change during the call the resource manager will adapt the optimum settings accordingly. The determined optimum settings are applied to the relevant components of the terminal.

It should be noted that whilst the optimised settings, are discussed separately from the reported communication conditions, these groups are not mutually exclusive. A reported communication system condition may be considered as any condition associated with the communication system, including the terminal 100, which is reported to the resource manager unit 22. For example, the available CPU resource for processing incoming data may be reported to the resource manager block as a reported communication system condition. After applying the optimization algorithm the resource manager block 22 may determine that the CPU available to processes the incoming data should be adjusted, thus the CPU resource may be applied as an optimised setting.

According to an embodiment of the invention the optimised settings are stored in a call history unit 24 provided in the terminal 100. The call history unit is arranged to store both the optimized setting and the reported communication system conditions for a call. The stored set of optimised settings and communication system conditions may relate to the last call that was made by the terminal. However in a preferred embodiment of the invention optimised settings and communication system conditions are stored for a plurality of calls or other communication events, wherein each call has its own set of conditions and settings.

Additionally each set of optimised settings and system conditions may be stored together with further information on the communication event to which they relate. In particular the set of conditions and settings may be stored together with an identifier for the called party.

In accordance with an embodiment of the invention, when a call is initiated the resource manager 22 selects system conditions and optimised settings from the call history unit 24 to be applied as initial conditions and settings for the call.

The resource manager may apply a selection algorithm to retrieve the correct settings from the call history unit 24. The selection algorithm may allow the selection to be based on call set up conditions that are detected before the call is established.

The call set up conditions may include information on the type of communication event to be established. For example, the set up conditions may specify whether the call is to be a voice call or a video call. If the call is to be a video call the algorithm may then select a set of conditions and settings that correspond to a previous video call.

The call set up conditions may specify the caller that is being called, using for example the telephone number, or the username of the called party. The selection algorithm may then select a set of conditions and settings that correspond to a previous call with the specified caller. The set of conditions and settings that correspond to a previous call with the caller may be identified using the caller identifier that was stored in association with the conditions and settings during a previous call. For example the settings and conditions stored for calls to a particular user may indicate that the terminal 112 associated with that user has a particularly slow CPU. This information can be used to initially set a slow data rate for the information transmitted from the calling terminal 100. Additionally the stored conditions may indicate the type of access technology associated with the connection that the called party has to the network and information relating to the power supply used at the called party's terminal 112.

In one embodiment of the invention, only some the stored optimised settings and system conditions may be applied during a call, while other required settings may take a default or random value. For example, a stored optimised setting or communication values may only be applied when it is determined that the condition or setting is reliable.

The reliability of a condition or setting may be determined from the stability of the condition or setting. This may be determined by analysing the trend of a range of values stored for each condition and setting. If the values for a condition or setting are substantially constant over the analysed range the value may be considered constant and that condition or setting may be applied.

Alternatively, call set up conditions which indicate the type of communication event or the called party may be used to predict the stability of some of the conditions and settings of a call For example if the communication events involves the use of an input device which has random CPU requirements setting that relate to the CPU usage may not be applied.

The call set up conditions may specify the location of the terminal 100. If the call set up conditions indicate that the location of the terminal is different, conditions and settings relating to the network conditions may not be applied, since these conditions and settings are likely to change from the optimised settings and conditions for a different location.

The call set up conditions may also specify the type of access technology used to connect the terminal 100 to the network. Additionally the call set up conditions may specify if the terminal currently powered by a battery or plugged into the power grid.

In one embodiment of the invention a stored setting or condition may be retrieved from the call history unit 24 and transmitted to the terminal 112 that the terminal 100 is in communication with at the start of the communication. According to this embodiment of the invention the terminal 112 that is in communication with the terminal 100 may use the transmitted condition or setting to update its own settings that are affected by the terminal 100. For example if the terminal 100 transmits a setting to the terminal 112 indicating that the optimised processing speed of the CPU in terminal 100 is high, the terminal 112 may increase the rate that data is transmitted to the terminal 100.

In an alternative embodiment of the present invention a user of the terminal may select which stored optimised settings and system conditions should be used as initial settings and conditions for a call. The user may be prompted to input this information directly. Alternatively the user may be prompted with questions that allow the resource manager unit of the terminal to select which settings should be retrieved. For example before the communication is established the user may be prompted with questions relating to the location of the terminal 100, the location of the terminal 1.12 that the user is communicating, or information on the type of terminal that the user is communicating with.

According to one embodiment of the invention, if the no previously stored value for a setting or condition exist when a call is established the resource manager unit is arranged to use a random or default value for that setting.

In accordance with an embodiment of the invention, during the call the resource manager block 22 is arranged to adjust the initial optimised settings that were retrieved from the call history unit in order to optimise the settings for the current call. Upon termination of the call the resource manager is arranged to store the newly optimised settings in the call history unit 24.

According to one embodiment of the invention the resource manager is arranged to use an average value of the values stored for a setting or condition to be applied. In an alternative embodiment of the invention the resource manager is arranged to apply the most common value for the setting or condition to be applied. In a further alternative embodiment of the invention the resource manager is arranged to use the most recent value of the setting or condition to be applied. In a further alternative embodiment the resource manager is arranged to apply an algorithm to determine whether to select an average, mode, or most recent value of the setting to be applied.

It should be appreciated that whilst the specific embodiments described above generally relate to voice and video calls, it should be appreciated that embodiments of the present invention relate to the transfer of other types of data, for example file transfer between terminals. Furthermore it should be appreciated that embodiments of the present invention are not limited to data transmission between two user terminals of a communication system. For example embodiments of the present invention include the transfer of data between network nodes such as servers.

Further embodiments of the invention may not be limited to the transmission of data via a communication network. For example, alternative embodiments of the invention relate to the transmission of data between a data receiving device and a data storage device.

In one particular embodiment of the invention a video capturing device may implement the present invention in order to apply optimised settings as initial settings. In this embodiment CPU resources, and other conditions may limit the resolution and-bit rate for storing video data. A resource manager in the video capturing device may apply the optimised settings generated during a previous video capturing operation as initial settings when a video capturing operation is started.

In embodiments of the present invention the required processing may be implemented as hardware or by using appropriately adapted software executed on a processor. Software for implementing the invention may be stored on and provided by means of a carrier medium such as a carrier disc, card or tape. A possibility is to download the software via a data network. This is an implementation issue.

While this invention has been particularly shown and described with reference to preferred embodiments, it will be understood to those skilled in the art that various changes in form and detail may be made without departing from the scope of the invention as defined by the claims.

## Claims

1. A method of establishing parameters to facilitate a communication event in a communication network comprising:
establishing a first communication event;
monitoring at least one parameter used to process data associated with the first communication event;
storing said at least one monitored parameter together with parameters monitored during previous communication events;
initiating a second communication event;
selecting at least one stored monitored parameter in response to initiating the second communication event, wherein the step of selecting comprises determining the reliability of the at least one stored monitored parameter from the stability of the at least one stored monitored parameter over a range of values stored for the at least one stored monitored parameter;
applying said at least one selected parameter to process data associated with said second communication event; and
establishing the second communication event.

2. A method according to claim 1, further comprising the step of, responsive to establishing the first communication event, applying an optimisation algorithm to at least one reported communication system condition to determine the at least one parameter used to process data associated with the first communication event.

3. A method according to claim 2, wherein the step of storing said at least one monitored parameter further comprises storing the at least one reported communication system condition in association with said at least one monitored parameter.

4. A method as claimed in claim 1, 2 or 3 further comprising the step of monitoring the at least one applied parameter during said second communication event.

5. A method as claimed in claim 4 further comprising the step of storing said at least one monitored applied parameters in response to terminating the second communication event.

6. A method as claimed in any preceding claim wherein the stored parameters are stored in association with information on the communication event to which they relate.

7. A method as claimed in claim 6 wherein the information on the communication event is an identifier for a called party.

8. A method as claimed in claim 6 wherein the information on the communication event defines a type of communication event.

9. A method as claimed in claim 6 wherein the information on the communication event defines call set up conditions.

10. A method as claimed in claim 6 wherein the information on the communication event defines one of: an access technology of a calling party, and an access technology of a called party.

11. A method as claimed in claim 6, 7, 8, 9 or 10, wherein the at least one selected parameter is selected in accordance with a selection algorithm which selects the at least one parameter in dependence on the information on the communication event.

12. A method as claimed in any preceding claim wherein the at least one selected parameter is a stable parameter.

13. A method as claimed in claim 6 wherein the information on the communication event is used to predict the stability of the at least one stored parameter.

14. A method as claimed in any preceding claim wherein the at least one selected parameter is applied by transmitting the at least one selected parameter to a destination node in the communication network.

15. A method as claimed in any of claims 1 or 3 - 14 wherein the at least one stored parameter defines a communication system condition.

16. A method as claimed in any preceding claim wherein the at least one stored parameter defines a setting.

17. A method of establishing parameters to facilitate a data transmission event comprising:
establishing a first data transmission event;
monitoring at least one parameter used to process data associated with the first data transmission event;
storing said at least one monitored parameter together with parameters monitored during previous data transmission events;
initiating a second data transmission event;
selecting at least one stored monitored parameter in response to initiating the second data transmission event, wherein the step of selecting comprises determining the reliability of the at least one stored monitored parameter from the stability of the at least one stored monitored parameter over a range of values stored for the at least one stored monitored parameter;
applying said at least one selected parameter to process data associated with said second data transmission event; and
establishing the second data transmission event.

18. A computer program comprising program code means adapted to perform any of steps of any of claims 1 to 16 when the program is run on a processor.

19. A device for establishing parameters to facilitate a communication event in a communication network comprising:
communication establishing means for establishing a first communication event and a second communication event;
monitoring means for monitoring at least one parameter used to process data associated with the first communication event;
storage means for storing said at least one monitored parameter together with parameters monitored during previous communication events;
control means for selecting at least one stored monitored parameter in response to the second communication event being initiated, wherein the control means is arranged to determine the reliability of the at least one stored monitored parameter from the stability of the at least one stored monitored parameter over a range of values stored for the at least one stored monitored parameter; and for applying said at least one selected parameter to process data associated with said second communication event.

## Patentansprüche

1. Verfahren zum Ermitteln von Parametern, um ein Kommunikationsereignis in einem Kommunikationsnetz zu ermöglichen, welches umfasst:
Aufbauen eines ersten Kommunikationsereignisses;
Überwachen wenigstens eines Parameters, der verwendet wird, um Daten zu verarbeiten, die zum ersten Kommunikationsereignis gehören;
Speichern des wenigstens einen überwachten Parameters zusammen mit während vorheriger Kommunikationsereignisse überwachter Parameter;
Beginnen eines zweiten Kommunikationsereignisses;
Auswählen wenigstens eines gespeicherten überwachten Parameters in Reaktion auf ein Beginnen des zweiten Kommunikationsereignisses, wobei der Schritt des Auswählens ein Bestimmen der Verlässlichkeit des wenigstens einen gespeicherten überwachten Parameters aus der Stabilität des wenigstens einen gespeicherten überwachten Parameters über einen Bereich von Werten umfasst, die für den wenigstens einen gespeicherten überwachten Parameter gespeichert sind;
Anwenden des wenigstens einen ausgewählten Parameters, um Daten zu verarbeiten, die zum zweiten Kommunikationsereignis gehören; und
Aufbauen des zweiten Kommunikationsereignisses.

2. Verfahren gemäß Anspruch 1, welches ferner den Schritt umfasst, in Reaktion auf ein Aufbauen des ersten Kommunikationsereignisses, Anwenden eines Optimierungsalgorithmus auf wenigstens einen berichteten Kommunikationssystemzustand, um den wenigstens einen Parameter zu bestimmen, der verwendet wird, um Daten zu verarbeiten, die zum ersten Kommunikationsereignis gehören.

3. Verfahren gemäß Anspruch 2, wobei der Schritt des Speicherns des wenigstens einen überwachten Parameters ferner ein Speichern des wenigstens einen berichteten Kommunikationssystemszustand in Verbindung mit dem wenigstens einen überwachten Parameter umfasst.

4. Verfahren gemäß Anspruch 1, 2 oder 3, welches ferner den Schritt des Überwachens des wenigstens einen angewandten Parameters während des zweiten Kommunikationsereignisses umfasst.

5. Verfahren gemäß Anspruch 4, welches ferner den Schritt des Speicherns des wenigstens einen überwachten Parameters in Reaktion auf ein Beenden des zweiten Kommunikationsereignisses umfasst.

6. Verfahren gemäß einem der vorhergehenden Ansprüche, wobei die gespeicherten Parameter in Verbindung mit Information über das Kommunikationsereignis, auf das sie sich beziehen, gespeichert werden.

7. Verfahren gemäß Anspruch 6, wobei die Information über das Kommunikationsereignis ein Bezeichner für eine angerufene Partei ist.

8. Verfahren gemäß Anspruch 6, wobei die Information über das Kommunikationsereignis einen Typ eines Kommunikationsereignisses definiert.

9. Verfahren gemäß Anspruch 6, wobei die Information über das Kommunikationsereignis Anrufaufbauzustände definiert.

10. Verfahren gemäß Anspruch 6, wobei die Information über das Kommunikationsereignis eine Zugriffstechnologie einer anrufenden Partei oder eine Zugriffstechnologie einer angerufenen Partei definiert.

11. Verfahren gemäß Anspruch 6, 7, 8, 9 oder 10, wobei der wenigstens eine ausgewählte Parameter gemäß einem Auswahlalgorithmus ausgewählt wird, der den wenigstens einen Parameter in Abhängigkeit der Information über das Kommunikationsereignis auswählt.

12. Verfahren gemäß einem der vorhergehenden Ansprüche, wobei der wenigstens eine ausgewählte Parameter ein stabiler Parameter ist.

13. Verfahren gemäß Anspruch 6, wobei die Information über das Kommunikationsereignis verwendet wird, um die Stabilität des wenigstens einen gespeicherten Parameters vorherzusagen.

14. Verfahren gemäß einem der vorhergehenden Ansprüche, wobei der wenigstens eine ausgewählte Parameter angewendet wird durch Übertragen des wenigstens einen ausgewählten Parameters zu einem Zielknoten in dem Kommunikationsnetz.

15. Verfahren gemäß einem der Ansprüche 1 oder 3-14, wobei der wenigstens eine gespeicherte Parameter einen Kommunikationssystemzustand definiert.

16. Verfahren gemäß einem vorhergehenden Anspruch, wobei der wenigsten eine gespeicherte Parameter eine Einstellung definiert.

17. Verfahren zum Ermitteln von Parametern, um ein Datenübertragungsereignis zu ermöglichen, welches umfasst:
Aufbauen eines ersten Datenübertragungsereignisses;
Überwachen wenigstens eines Parameters, der verwendet wird, um Daten zu verarbeiten, die zum ersten Datenübertragungsereignis gehören;
Speichern des wenigstens einen überwachten Parameters zusammen mit während vorheriger Datenübertragungsereignisse überwachter Parameter;
Beginnen eines zweiten Datenübertragungsereignisses;
Auswählen wenigstens eines gespeicherten überwachten Parameters in Reaktion auf ein Beginnen des zweiten Datenübertragungsereignisses, wobei der Schritt des Auswählens ein Bestimmen der Verlässlichkeit des wenigstens einen gespeicherten überwachten Parameters aus der Stabilität des wenigstens einen gespeicherten überwachten Parameters über einen Bereich von Werten umfasst, die für den wenigstens einen gespeicherten überwachten Parameter gespeichert sind;
Anwenden des wenigstens einen ausgewählten Parameters, um Daten zu verarbeiten, die zum zweiten Datenübertragungsereignis gehören; und
Aufbauen des zweiten Datenübertragungsereignisses.

18. Computerprogramm umfassend ein Programmcodemittel, das ausgelegt ist, die Schritte der Ansprüche 1 bis 16 durchzuführen, wenn das Programm auf einem Prozessor läuft.

19. Vorrichtung zum Ermitteln von Parametern, um ein Kommunikationsereignis in einem Kommunikationsnetz zu ermöglichen, welche umfasst:
ein Kommunikationsaufbaumittel zum Aufbauen eines ersten Kommunikationsereignisses und eines zweiten Kommunikationsereignisses;
ein Überwachungsmittel zum Überwachen wenigstens eines Parameters, der verwendet wird, um Daten zu verarbeiten, die zum ersten Kommunikationsereignis gehören;
ein Speichermittel zum Speichern des wenigstens einen überwachten Parameters zusammen mit während vorheriger Kommunikationsereignisse überwachter Parameter;
ein Steuermittel zum Auswählen wenigstens eines gespeicherten überwachten Parameters in Reaktion auf ein Beginnen des zweiten Kommunikationsereignisses, wobei das Steuermittel ausgelegt ist, die Verlässlichkeit des wenigstens einen gespeicherten überwachten Parameters aus der Stabilität des wenigstens einen gespeicherten überwachten Parameters über einen Bereich von Werten zu bestimmen, die für den wenigstens einen gespeicherten überwachten Parameter gespeichert sind; und zum Anwenden des wenigstens einen ausgewählten Parameters, um Daten zu verarbeiten, die zum zweiten Kommunikationsereignis gehören.

## Revendications

1. Procédé pour établir des paramètres pour faciliter un événement de communication dans un réseau de communication, comprenant les étapes suivantes :
établir un premier événement de communication ;
surveiller au moins un paramètre utilisé pour traiter des données associées au premier événement de communication ;
mémoriser ledit au moins un paramètre surveillé avec des paramètres surveillés pendant des événements de communication précédents ;
lancer un deuxième événement de communication ;
sélectionner au moins un paramètre surveillé mémorisé en réponse au lancement du deuxième événement de communication, l'étape de sélection comprenant la détermination de la fiabilité dudit au moins un paramètre surveillé mémorisé à partir de la stabilité dudit au moins un paramètre surveillé mémorisé sur une plage de valeurs mémorisées pour ledit au moins un paramètre surveillé mémorisé ;
appliquer ledit au moins un paramètre sélectionné pour traiter des données associées au deuxième événement de communication ; et
établir le deuxième événement de communication.

2. Procédé selon la revendication 1, comprenant en outre une étape consistant à, en réponse à l'établissement du premier événement de communication, appliquer un algorithme d'optimisation à au moins un état de système de communication rapporté pour déterminer ledit au moins un paramètre utilisé pour traiter des données associées au premier événement de communication.

3. Procédé selon la revendication 2, dans lequel l'étape de mémorisation dudit au moins un paramètre surveillé comprend en outre la mémorisation dudit au moins un état de système de communication rapporté en association avec ledit au moins un paramètre surveillé.

4. Procédé selon la revendication 1, 2 ou 3 comprenant en outre une étape consistant à surveiller ledit au moins un paramètre appliqué pendant le deuxième événement de communication.

5. Procédé selon la revendication 4, comprenant en outre une étape consistant à mémoriser ledit au moins un paramètre appliqué surveillé en réponse à la terminaison du deuxième événement de communication.

6. Procédé selon l'une quelconque des revendications précédentes, dans lequel les paramètres mémorisés sont mémorisés en association avec des informations sur l'événement de communication auquel ils sont associés.

7. Procédé selon la revendication 6, dans lequel les informations sur l'événement de communication sont un identificateur pour un partenaire appelé.

8. Procédé selon la revendication 6, dans lequel les informations sur l'événement de communication définissent un type d'événement de communication.

9. Procédé selon la revendication 6, dans lequel les informations sur l'événement de communication définissent des conditions d'établissement d'appel.

10. Procédé selon la revendication 6, dans lequel les informations sur l'événement de communication définissent un des éléments suivant : une technologie d'accès d'un partenaire appelant, et une technologie d'accès d'un partenaire appelé.

11. Procédé selon la revendication 6, 7, 8, 9 ou 10, dans lequel ledit au moins un paramètre sélectionné est sélectionné conformément à un algorithme de sélection qui sélectionne ledit au moins un paramètre en fonction des informations sur l'événement de communication.

12. Procédé selon l'une quelconque des revendications précédentes, dans lequel ledit au moins un paramètre sélectionné est un paramètre stable.

13. Procédé selon la revendication 6, dans lequel les informations sur l'événement de communication sont utilisées pour prédire la stabilité dudit au moins un paramètre mémorisé.

14. Procédé selon l'une quelconque des revendications précédentes, dans lequel ledit au moins un paramètre sélectionné est appliqué en transmettant ledit au moins un paramètre sélectionné à un noeud de destination dans le réseau de communication.

15. Procédé selon l'une quelconque des revendications 1 ou 3 à 14, dans lequel ledit au moins un paramètre mémorisé définit un état de système de communication.

16. Procédé selon l'une quelconque des revendications précédentes, dans lequel ledit au moins un paramètre mémorisé définit un réglage.

17. Procédé d'établissement de paramètres pour faciliter un événement de transmission de données, comprenant les étapes suivantes :
établir un premier événement de transmission de données ;
surveiller au moins un paramètre utilisé pour traiter des données associées au premier événement de transmission de données ;
mémoriser ledit au moins un paramètre surveillé avec des paramètres surveillés pendant des événements de transmission de données précédents ;
lancer un deuxième événement de transmission ;
sélectionner au moins un paramètre surveillé mémorisé en réponse au lancement du deuxième événement de transmission de données, l'étape de sélection comprenant la détermination de la fiabilité dudit au moins un paramètre surveillé mémorisé à partir de la stabilité dudit au moins un paramètre surveillé mémorisé sur une plage de valeurs mémorisées pour ledit au moins un paramètre surveillé mémorisé ;
appliquer ledit au moins un paramètre sélectionné pour traiter des données associées au deuxième événement de transmission de données ; et
établir le deuxième événement de transmission de données.

18. Programme d'ordinateur comprenant des moyens de codes de programme adaptés à réaliser l'une quelconque des étapes de l'une quelconque des revendications 1 à 16, lorsque le programme est exécuté sur un processeur.

19. Dispositif pour établir des paramètres pour faciliter un événement de communication dans un réseau de communication, comprenant :
des moyens d'établissement de communication pour établir un premier événement de communication et un deuxième événement de communication ;
des moyens de surveillance pour surveiller au moins un paramètre utilisé pour traiter des données associées au premier événement de communication ;
des moyens de mémorisation pour mémoriser ledit au moins un paramètre surveillé avec des paramètres surveillés pendant des événements de communication précédents ;
des moyens de commande pour sélectionner au moins un paramètre surveillé mémorisé en réponse au lancement du deuxième événement de communication, les moyens de commande étant agencés pour déterminer la fiabilité dudit au moins un paramètre surveillé mémorisé à partir de la stabilité dudit au moins un paramètre surveillé mémorisé sur une plage de valeurs mémorisées pour ledit au moins un paramètre surveillé mémorisé ; et pour appliquer ledit au moins un paramètre sélectionné pour traiter des données associées au deuxième événement de communication.
